# EUROPEAN PATENT SPECIFICATION

(11) **EP 2 888 331 B1**
(45) Date of publication and mention of the grant of the patent: **20.03.2019**
(21) Application number: 13750484.1
(22) Date of filing: 13.08.2013
(51) Int. Cl.: C09J 163/00, C08G 59/56, C08G 59/66, C08L 75/00, C08L 75/04

(54) **ACCELERATED AND TOUGHENED TWO-PART EPOXY ADHESIVES**
BESCHLEUNIGTE UND SCHLAGZÄHMODIFIZIERTE ZWEIKOMPONENTEN-EPOXIDKLEBSTOFFE
ADHÉSIFS ÉPOXYDES EN DEUX PARTIES ACCÉLÉRÉS ET RIGIDIFIÉS

(30) Priority: 27.08.2012 US 201261693400 P
(43) Date of publication of application: 01.07.2015
(73) Proprietor: Dow Global Technologies LLC, Midland, MI 48674 (US)
(72) Inventor: LUTZ, Andreas, CH-8854 Galgenen (CH); STEINER, Beda, CH-8718 Schaenis (CH)
(74) Representative: Beck Greener
(86) International application number: PCT/US2013/054609
(87) International publication number: WO 2014/035655

(56) References cited:
- EP-A1- 1 541 610
- EP-A1- 1 602 702
- EP-A1- 1 695 990
- US-A1- 2009 048 370

## Description

### FIELD OF THE INVENTION

The present invention relates to a two-part epoxy adhesive composition, and to a cured epoxy adhesive having good strength and rapid curing properties.

### INTRODUCTION

Epoxy adhesives, including 1-component (1K) and 2-component (2K) adhesives, are often used in industry, e.g., in the automotive industry, in the initial construction of articles (e.g., an automobile assembly plant), as well as for repair of articles (e.g., in an automobile repair shop to repair structures or closures). Additionally they can be used to join metal parts (preferably hang-on parts) outside the body shop like doors or hoods directly at the automotive manufacturer. They can be also used to bond other substrates than metals, like plastics or composites, e.g. carbon fiber composites (CFC).

1K adhesives are generally preferred over 2K adhesives in factory settings because 1K adhesives generally exhibit better strength properties and corrosion properties, and better tolerance for surface defects and conditions (e.g., presence of manufacturing oils). However, 1K adhesives generally require elevated temperatures, e.g., above 60° C or 100° C, in order to cure.

Such elevated temperatures are generally not practically obtained in a repair setting, e.g., in a home or in an automobile repair shop. Therefore, 2K adhesives are generally used in such settings, despite longer curing times and comparatively reduced strength. For example, retail quick-setting 2K epoxies typically do not contain reactive tougheners (which are relatively expensive), and so typically exhibit inferior static and dynamic strength properties.

The two parts of a 2K epoxy are typically an epoxy resin side (referred to herein as part A), and a hardener side (referred to herein as part B). A 2K epoxy (such as used, e.g., in the automotive industry) should be flexible and should offer certain toughness. Adhesives with insufficient toughness would be too brittle to withstand dynamic loading scenarios and may not be well suited for the repair of structural parts which have been originally bonded by using one-component crash durable epoxy adhesives (1K CDAs).

Typical 2K epoxy adhesives cure slowly over time, and generally require 6 to 8 hours of curing prior to handling, with full cure in one, two, or as many as seven days. Some current available toughened 2K epoxy adhesive offer high dynamic peel strength, but do not provide rapid build-up of strength over time. Rapid strength build up over time would be beneficial to save process time, move parts more quickly, or accelerate the curing via thermal means like induction.

It is possible to speed up curing times by adding certain low molecular weight additives to the hardener side of a 2K epoxy, but these additives tend to increase brittleness of the cured adhesive, and tend to reduce dynamic strength performance. Therefore, when such additives are used, tougheners are typically added to the epoxy resin side of a 2K adhesive to reduce brittleness.

U.S. Patent No. 5,278,257 describes 1K epoxy compositions containing A) a copolymer based on at least one 1,3-diene and at least one polar, ethylenically unsaturated comonomer and B) a phenol-terminated polyurethane, polyurea or polyurea-urethane of the formula I 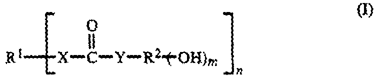 in which m is 1 or 2, n is 2 to 6, R¹ is the n-valent radical of an elastomeric prepolymer which is soluble or dispersible in epoxide resins, X and Y independently of one another are -O- or -NR³-, it being necessary for one of these groups to be -NR³-, R² is an m+1-valent radical of a polyphenol or aminophenol after the removal of the phenolic hydroxy group(s) or the amino group or both the amino group and the phenolic hydroxyl group, respectively, and R³ is hydrogen, C₁-C₆ alkyl or phenyl, are described. Compounds containing the components A) and B) as well as an epoxide resin C) are also described. The cured products are distinguished by a high peel strength and high resistance to crack propagation. The curable compositions can be employed, for example, as structural adhesives.

U.S. Patent No. 7,557,169 describes 1K epoxy compositions comprising one or more epoxy resins; one or more rubber modified epoxy resins; one or more toughening compositions comprising the reaction product of one or more isocyanate terminated prepolymers and one or more capping compounds having one or more phenolic, benzyl alcohol, aminophenyl, or, benzylamino groups wherein the reaction product is terminated with the capping compounds; one or more curing agents for epoxy resins and one or more catalysts which initiate cure at a temperature of about 100° C or greater; and optionally; fillers adhesion promoters, wetting agents or rheological additives useful in epoxy adhesive compositions; wherein the adhesive composition has a viscosity at 45° C of about 20 Pas to about 400 Pas. The composition can be used as an adhesive and applied as a stream using a high speed streaming process.

U.S Patent Pub. 2009/0048370 (WO2009/025991A1) discloses two-component epoxy-based structural adhesives which exhibit excellent impact resistance, even when cured at approximately room temperature. The adhesives include an epoxy resin component which includes an epoxy resin and a reactive tougher. The adhesives also include a hardener component, which includes from 15 to 50 weight percent of an amine-terminated polyether, from 4 to 40 weight percent of an amine terminated rubber having a glass transition temperature of -40° C or below, and from 10 to 30 weight percent of an amine-terminated polyamide having a melting temperature of no greater than 50° C.

There remains a need for a 2K epoxy adhesive with rapid curing and high dynamic and/or quasistatic strength.

### SUMMARY OF THE INVENTION

We have surprisingly found that if a reactive blocked polyurethane-prepolymer (PU-prepolymer) is used in both sides of a 2K epoxy (e.g., side A (containing epoxy resin) and side B (containing hardener)), that the strength build up is significantly increased over reference compositions, and that high dynamic impact peel strengths can be achieved, with rapid curing times.

The present invention provides an adhesive prepared by combining an epoxy resin composition A and a hardener composition B, where the epoxy resin composition A comprises, or is prepared by combining: a first reactive toughener in an amount of 5 to 50 wt% of composition A; and a liquid epoxy resin in an amount of 20 to 65 wt% of composition A; and the hardener composition B comprises, or is prepared by combining: a second reactive toughener in an amount of 5 to 50 wt% of composition B; a curing accelerator; a polymeric amine or amide, or combination thereof, in the amount of 15 to 40 wt% of composition B; and a low molecular weight amine in the amount of 10 to 25 wt% of composition B; wherein the total amount of first and second reactive toughener is 10 to 40 wt% of the adhesive.

The present invention also provides a method of making an epoxy adhesive by combining an epoxy resin composition A and a hardener composition B as described above. The present invention also provides a method of making a cured epoxy adhesive by combining an epoxy resin composition A and a hardener composition B as described above to obtain an uncured epoxy adhesive, and permitting the uncured epoxy adhesive to cure. The present invention also provides a kit comprising an epoxy resin composition A and a hardener composition B as described above, wherein the total amount of first and second reactive toughener is 10 to 40 wt% based on a volume ratio of composition A:composition B in the range of 2:1 to 1:2.

### DETAILED DESCRIPTION OF THE INVENTION

The present invention pertains to epoxy adhesive compositions, preferably 2K epoxy adhesive compositions.

As is known in the art, in a 2K epoxy adhesive, curing can take place at ambient conditions, such that the adhesive comprises at least two different compositions (the epoxy resin composition and the hardener composition), which are kept separate until use. The epoxy resin composition generally contains one or more epoxy resins as well as other ingredients and additives included for various reasons. The epoxy resin composition generally does not comprise a hardening agent or hardening accelerator.

The hardener composition generally contains one or more hardening or curing agents. At least one hardening accelerator (enable hardening at non-elevated temperatures) is also preferably included. The hardening composition generally contains other additives included for various reasons. The hardening composition generally does not comprise an epoxy resin.

Adhesive compositions and methods according to the present invention exhibit good cure times and cured strength.

Cure times can be measured by any means, and preferably refers to set time. For a 2K epoxy that sets at ambient temperature, set time is the amount of time from mixing the two components to when the adhesive has sufficiently set as to make the adhesive not further workable (e.g., cannot be used to bond two new surfaces, previously bonded surfaces cannot be repositioned without breaking or damaging the bond, etc.). One preferred method is the bead test to determine set time, in which a bead of epoxy adhesive is applied to a surface. After curing for a certain amount of time (e.g., 20 minutes), the bead is tested every five minutes with a spatula by touching or pressing the flat surface of the spatula into the bead. One can test either for tackiness of the bead, for setting of the bead, or both. When testing for setting, the bead is considered set when it has become solid, and is no longer pasty, e.g., when the spatula does not intrude into the bead when using heavy hand pressure.

It will be understood that the epoxy adhesive is not fully cured at the set time, but generally continues curing after the set time. Preferably, the epoxy adhesive continues strengthening after the set time.

Set time for an epoxy adhesive according to the present invention is preferably less than or equal to 60 minutes, more preferably less than or equal to 50 minutes, 45 minutes, or 40 minutes. There is no particular preferred lower limit to set time. However, set time is preferably sufficiently long to permit time for thorough mixing of the epoxy resin and hardener compositions to prepare the epoxy adhesive, application of the epoxy adhesive to the desired surface(s) of the work piece, and assembly/repair of the work piece, followed by any desired adjustment or repositioning of the work piece prior to setting of the epoxy adhesive. As a general matter, set time is generally 5 or more minutes, or 10 or more minutes, or 15 or more minutes.

Strength of the fully or partially cured epoxy adhesives according to the present invention can be measured by any useful method by those of ordinary skill in the art. Preferably, measurement of strength-build-up includes a quasistatic method such as lap shear strength. Lap shear strength is conveniently measured according to DIN EN 1465: 25×10 mm bonding area (test speed 10 mm/min), zinc coated electro-galvanized steel DC 04 - B + ZE 0.8 mm. Curing is preferably performed at ambient temperature, e.g., at 23° C. Testing is performed at any convenient time, and preferably at several times, e.g., 120 min, 150 min, 180 min, and 7 days, from when components A and B are mixed together.

To monitor toughness, especially for adhesives which are to be used for vehicle bonding, a dynamic testing method may be used. Preferably, dynamic testing includes impact peel strength (IPS) and energy. Dynamic testing may be performed on partially or fully cured samples, preferably for fully cured samples (e.g., after curing for 7 days). They are conveniently measured or calculated according to ISO 11343: 30×20 mm bonding area (test speed 2 m/s) zinc-coated electro-galvanized steel DC 04 - B + ZE 0.8 mm plate thickness, with 0.2 mm adhesive thickness.

The lap shear strength at 120 minutes is preferably at least 0.1 MPa, more preferably at least 0.2 MPa, more preferably at least 0.3 MPa. There is no preferred upper limit on lap shear strength after 120 minutes. In general, however, the lap shear strength is expected to be less than or equal to 0.5 MPa or 0.4 MPa. Some exemplary lap shear strengths at 120 minutes include 0.1, 0.2, and 0.3 MPa.

The lap shear strength at 150 minutes is preferably at least 0.3 MPa, more preferably at least 0.4 MPa, more preferably at least 0.5 MPa or 1 MPa. There is no preferred upper limit on lap shear strength after 150 minutes. In general, however, the lap shear strength is expected to be less than or equal to 2 MPa or 1.5 MPa. Some exemplary lap shear strengths at 150 minutes include 0.4, 0.5, 0.7, 0.9 and 1.2 MPa.

The lap shear strength at 180 minutes is preferably at least 1 MPa, more preferably at least 1.5 MPa, more preferably at least 2 MPa or 3 MPa. There is no preferred upper limit on lap shear strength after 180 minutes. In general, however, the lap shear strength is expected to be less than or equal to 6 MPa or 5 MPa. Some exemplary lap shear strengths at 180 minutes include 1.6, 2.1, 2.4, 2.5, 2.8, 3.2, 3.3, and 3.4 MPa.

The lap shear strength at 7 days is preferably at least 15 MPa, more preferably at least 16 MPa, 17 MPa, 18 MPa, or 19 MPa. There is no preferred upper limit on lap shear strength after 7 days. In general, however, the lap shear strength is expected to be less than or equal to 30 MPa, 25 MPa, 24 MPa, or 23 MPa. Some exemplary lap shear strengths at 7 days include 17.1, 18.5, 20.6, 20.9, 21.1., 21.9, and 22.9 MPa.

The impact peel strength at 7 days is preferably at least 10 N/mm, more preferably at least 15 N/mm, 20 N/mm, 22 N/mm or 25 N/mm. There is no preferred upper limit on impact peel strength after 7 days. In general, however, the impact peel strength is expected to be less than or equal to 50 N/mm, 45 N/mm, or 40 N/mm. Some exemplary impact peel strengths at 7 days include 12, 13, 14, 15, 16, 17, 20, 26, and 39 N/mm.

The impact energy at 7 days is preferably at least 3 J, more preferably at least 4 J, 5 J, or 6 J. There is no preferred upper limit on impact energy after 7 days. In general, however, the impact energy is expected to be less than or equal to 18 J, 14 J, or 13 J. Some exemplary impact energies at 7 days include 3.9, 4.4, 4.6, 4.7, 5.3, 5.5, 8.3, 8.8, and 12.3 J.

Quasistatic and/or dynamic testing are preferably performed at room temperature (e.g., 23° C).

In the present invention, a reactive toughener is used in both the epoxy resin composition and the hardener composition. The reactive toughener is preferably a reactive capped prepolymer, more preferably a reactive capped polyurethane prepolymer.

The reactive capped prepolymer can be any suitable elastomeric prepolymer terminated with capping groups that, after capping, retain at least one reactive phenolic group. Some preferred reactive capped prepolymers include phenolic terminated polyurethanes, polyureas, or polyurea-urethanes, examples of which are disclosed in U.S. Patent No. 5,278,257. Other preferred reactive capped prepolymers include phenolic-terminated polyether polyols or polyamines, examples of which are disclosed in U.S. Patent No. 7,557,169. Other preferred reactive capped prepolymers include products described in US 8,062,468; EP2084200, EP 0308664, and US 2006/0276601.

There is no particular critical numerical upper or lower limit to the molecular weight of the reactive capped prepolymer. The molecular weight is preferably high enough to impart sufficient strength to the adhesive composition. The molecular weight is preferably low enough that the reactive capped prepolymer is a liquid with suitable viscosity for processing. In general, the molecular weight of the reactive capped prepolymer will preferably be greater than 5,000 g/mol, more preferably greater than 8,000 g/mol; 12,000 g/mol; or 15,000 g/mol. In general, the molecular weight of the reactive capped prepolymer will be less than 50,000 g/mol; more preferably less than 40,000 g/mol; or 30,000 g/mol. A suitable method for measuring molecular weight is a GPC analysis of weight-average molecular weight.

The capping group of the reactive capped prepolymer preferably comprises at least two reactive functional groups (e.g., phenolic hydroxy groups) and preferably is bisphenolic in nature. Without being limited by theory, it is believed that one of the functional groups reacts with the isocyanate groups of the prepolymer to form a urethane linkage and the other one remains as a functional and reactive group on the capping molecule.

Some preferred phenolic capping groups include phenols, bisphenols, their derivatives, and combinations thereof. U.S. Patent No. 8,026,468 discloses phenolic compounds suitable as phenolic capping groups in the present invention. Some especially preferred bisphenols include bisphenol A, bisphenol M, and o,o'-diallylbisphenol A (ODBA). Other preferred bisphenols include bisphenol B, AP, AF, B, BP, C, E, F, G, K, S, P, PH, TMC and Z, as well as derivatives and combinations thereof. Additional preferred phenolic agents include resorcinol. Suitable phenolic agents are available commercially, and may also be prepared by one of ordinary skill in the art. Natural products rich in phenols (e.g., cashew nut shell oil, which is rich in resorcinol), can be used as a source of the phenolic agent.

Preferred phenolic capping groups have molecular weight less than 500 g/mol or 400 g/mol. Preferred phenolic capping groups have molecular weight greater than or equal to 110 g/mol, or 150 g/mol.

The reactive capped prepolymer may be made in any way. In one exemplary method, a prepolymer having functional groups (e.g., amine, or hydroxy) is obtained, and reacted with an excess of polyisocyanate under appropriate conditions to form an isocyanate adduct of the prepolymer, which is then reacted with the capping group. Other manufacturing methods are known in the art, or can be devised by the person of ordinary skill in the art.

The amount of phenolic capping group used should be at least enough to react completely with free isocyanate groups on the prepolymer. When preparing reactive capped tougheners, the reaction is preferably permitted to proceed until the isocyanate content (NCO content) is reduced to a suitable level. This may be accomplished by using an excess of capping agent. Preferably, this is accomplished by measuring NCO content, e.g., as measured by FTIR. When assessed by FTIR, the reaction is permitted to continue until NCO peaks in the FTIR have substantially disappeared, or, preferably, have completely disappeared. Most preferably, the NCO content is reduced to 0.0% as measured, e.g., by FTIR.

The amount of capping group and prepolymer should be selected so that fewer than all reactive groups on the capping groups (e.g., phenolic hydroxy groups) react with the prepolymer. That is, it is preferred for an excess of polyphenol to be reacted with the prepolymer to obtain a toughener with reactive phenolic hydroxy groups. Preferably, at least 1.3 hydroxy equivalents in the capping group are reacted per equivalent of unreacted prepolymer, more preferably at least 1.6 equivalents, 2 equivalents, or 3 equivalents per equivalent of unreacted prepolymer.

The reactive toughener used in the epoxy resin composition may be the same as, or different from, the reactive toughener used in the hardener composition. Preferably, the same reactive toughener is used in the epoxy resin composition and the hardener composition.

The reactive toughener should be present in each of the epoxy resin composition and the hardener composition. The amount of reactive toughener used in each composition will vary according the needs of any particular intended use, and can be determined by those of ordinary skill in the art. Sufficient reactive toughener should be used in each composition to obtain the advantages of the present invention.

The amount of reactive toughener used in each of the epoxy resin composition and the hardener composition is preferably at least 5 wt%, more preferably at least 8 wt%, 10 wt%, 15 wt% or 20 wt% of the respective composition. The amount of reactive toughener is preferably less than 50 wt%, more preferably less than 45 wt%, 40 wt%, 35 wt% or 30 wt% based on the weight of the respective composition. Some preferred amounts include 8.5 wt%, 15 wt%, 17 wt%, and 30 wt%.

There should be sufficient total toughener in the adhesive composition (obtained by combining the epoxy resin composition and the hardener composition) to obtain an adhesive with satisfactory properties, e.g., short cure time and/or high strength (static and/or dynamic strength). The total amount of reactive toughener in an adhesive composition of the present invention preferably is at least 10 wt%, more preferably at least 15 wt%, most preferably at least 20 wt% with respect to the total weight of the adhesive composition. Total amounts above 20 wt% offer rapid curing and show high impact peel values. The total amount of reactive toughener in the present invention is preferably less than 40 wt%, more preferably less than 35 wt%, 30 wt%, or 25 wt%. Some preferred total amounts of reactive toughener in the adhesive composition are 10.7 wt%, 15.7 wt%, 16.3 wt%, 21.3 wt%, and 32.7 wt%.

Epoxy resins useful in this invention include a wide variety of curable epoxy compounds and combinations thereof. Useful epoxy resins include liquids, solids, and mixtures thereof. Typically, the epoxy compounds are epoxy resins which are also referred to as polyepoxides. Polyepoxides useful herein can be monomeric (e.g., the diglycidyl ether of bisphenol A, diglycidyl ether of bisphenol F, diglycidyl ether of tetrabromobisphenol A, novolac-based epoxy resins, and tris-epoxy resins), higher molecular weight resins (e.g., the diglycidyl ether of bisphenol A advanced with bisphenol A) or polymerized unsaturated monoepoxides (e.g., glycidyl acrylates, glycidyl methacrylate, allyl glycidyl ether, etc.) to homopolymers or copolymers. Most desirably, epoxy compounds contain, on the average, at least one pendant or terminal 1,2-epoxy group (i.e., vicinal epoxy group) per molecule.

Solid epoxy resins that may be used in the present invention can preferably comprise or preferably be mainly based upon Bisphenol A. For example, a preferred epoxy resin is diglycidyl ether of bisphenol A Dow Chemical DER 664 UE solid epoxy.

One preferable epoxy resin has general formula: 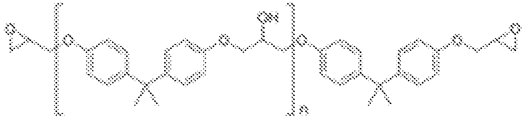 where n is generally in the range of 0 to about 25. Some basic liquid resins, e.g. D.E.R. 331, can have epoxy equivalent weights in the range of about 180-195 g/mol. Others, such as D.E.R. 332, can have epoxy equivalent weights in the range of about 170-175 g/mol.

Combinations of different epoxy resins may be used to adjust properties of the epoxy adhesive.

In compositions and methods of the present invention, the epoxy resin composition may comprise any suitable amount of epoxy resin. Preferably, the liquid epoxy resin comprises more than 15 wt%, more preferably more than 20 wt%, 25 wt%, 30 wt%, 35 wt%, or 40 wt% of the epoxy resin composition. Preferably, the liquid epoxy resin comprises less than 65%, more preferably less than 60 wt%, 55 wt%, 50 wt%, or 45 wt% of the epoxy resin composition. Some preferred amounts of liquid epoxy resin include 30 wt%, 32 wt%, 35 wt%, and 36 wt% of the epoxy resin composition.

When used, solid epoxy resin preferably comprises less than 15 wt%, more preferably an amount of, or less than, 12 wt% or 10 wt% of the epoxy resin composition. When used, solid epoxy resin preferably comprises an amount of, or more than, 0 wt%, preferably at least 1 wt%, 3 wt%, or 5 wt% of the epoxy resin composition.

One or more curing accelerators (catalysts) is preferably used, preferably in the hardener composition B, to speed up setting of the adhesive. The curing accelerator preferably work by catalyzing the reaction between the low molecular weight amine and polyamine on the one hand, with the epoxy resin on the other hand. The curing accelerator preferably includes a tertiary amine. A preferred example is 2,4,6-tris(dimethylaminomethyl) phenol, available from Air Products under the name Ancamine K54. Other polyamines are described in U.S. Patent No. 4,659,779 (and its family members U.S. Patents No. 4,713,432 and 4,734,332; and EP-A-0 197 892).

Curing accelerator may be present in any amount that suitably accelerates curing of the epoxy adhesive. Preferably, a curing accelerator may be present in amounts of at least 5 wt%, more preferably at least 8 wt% or 10 wt%, based on weight of the hardener composition. Preferably, a curing accelerator may be present in an amount of, or less than, 20 wt%, more preferably 15 wt%. A preferred amount includes 12 wt%.

Hardener composition B according to the present invention comprises at least one hardener that is capable of cross-linking with epoxy groups on the epoxy resin. Any hardener, e.g., suitable for a 2K epoxy, may be used. Preferred hardeners include polymeric amines (polyamines) and polymeric amides (polyamides) (including, e.g., polyamidoamines), low molecular weight amines, and combinations thereof.

One preferred polyamine includes a polyetheramine-epoxy adduct, that is, a reaction product of a stoichiometric excess of an amine prepolymer with an epoxy resin. The polyamine is preferably included in the hardener composition, more preferably only in the hardener composition. Polyamine hardeners tend to react more slowly than low molecular weight amines, but can add flexibility to the cured adhesive.

The amine prepolymer may be any amine prepolymer that has at least two amine groups in order to allow cross-linking to take place. The amine prepolymer comprises primary and/or secondary amine groups, and preferably comprise primary amine groups. Suitable amine prepolymers include polyether diamines and polyether triamines, and mixtures thereof. Polyether triamine is preferred. The polyether amines may be linear, branched, or a mixture. Branched polyether amines are preferred. Any molecular weight polyetheramine may be used, with molecular weights in the range of 200-6000 or above being suitable. Molecular weights may be above 1000, or more preferably above 3000. Molecular weights of 3000 or 5000 are preferred.

Suitable commercially available polyetheramines include those sold by Huntsman under the Jeffamine trade name. Suitable polyether diamines include Jeffamines in the D, ED, and DR series. These include Jeffamine D-230, D-400, D-2000, D-4000, HK-511, ED-600, ED-900, ED-2003, EDR-148, and EDR-176. Suitable polyether triamines include Jeffamines in the T series. These include Jeffamine T-403, T-3000, and T-5000. Polyether triamines are preferred, and polyether triamine of molecular weight about 5000 (e.g., Jeffamine T-5000) is most preferred. The equivalents of any of the above may also be used in partial or total replacement.

When a polyamide is included, any polyamide hardener may be used. Some preferred polyamides include reaction products of a dimerized fatty acid and a polyamine. Examples of such polyamides include those available from Cognis under the trade designations Versamid® 115, Versamid® 125 and Versamid®.

Any amount of polyamine or polyamide (or combination thereof) may be used in the present invention. The polyamine is preferably a polyetheramine. The polyamine or polyamide is preferably present in an amount greater than 10 wt%, more preferably greater than 15 wt%, 20 wt% or 25 wt%. The polyamine or polyamide is preferably present in an amount of less than 60 wt%, more preferably less than 55 wt%, 50 wt% or 45 wt%. Some preferred amounts include 27.5 wt%, 30 wt%, 40 wt%, and 42.5 wt%. The weight percents are expressed in terms of the composition (e.g., resin composition or hardener composition, preferably hardener composition) where the polyamine and/or polyamide is included.

Hardener composition B also preferably comprises a low molecular weight (non-polymeric) amine hardener. This component preferably acts as a cross-linking and/or chain-extending agent. Preferred cross-linking agents include primary and/or secondary amines.

Preferred cross-linking agents generally have molecular weights up to 300 g/mol, 250 g/mol or 200 g/mol. Preferred cross-linking agents generally have molecular weights of at least 48 g/mol or 60 g/mol. Some preferred molecular weights include 60 g/mol, 103 g/mol, 129 g/mol, and 170 g/mol. Some preferred cross-linking and/or chain extending agents include triethylenetetramine (TETA), diethylenetriamine (DETA), isophoronediamine (IPDA), and ethylenediamine.

Any amount of low molecular weight hardener may be used to effect cross-linking. When used, hardener composition B preferably comprises at least 5 wt%, 10 wt%, or 15 wt% of the agent. Preferably, hardener composition B comprises up to 35 wt%, 30 wt%, or 25 wt% of the agent. One preferred amount is 18 wt% of the agent based on weight of hardener composition B.

The curing accelerator and hardeners (e.g., low molecular weight amine and polymeric amine) should be used in suitable proportions and amounts to decrease the required curing temperature and enable the combined parts of the 2K adhesive to cure at a suitable temperature. The curing temperature is preferably less than 100° C, more preferably less than 90° C, 60, or 50° C, or 40° C. The epoxy adhesive compositions preferably cure at ambient temperature, e.g., 20° C or 25° C or therebetween. There is no particular preferred lowest curing temperature. As a general matter, however, curing temperature will generally be above 0° C, 10° C, or 15° C. It is preferred that curing can take place in a range of, e.g., 10° to 40° C, more preferably 15° to 35° C. It is permissible to heat the inventive epoxy adhesive, e.g., in order to further reduce curing time or to obtain more complete curing.

Any curing agent appropriate for a two-component (2K) epoxy adhesive may be optionally used. When used, the hardener preferably comprises a latent hardener. Any latent hardener that does not cause hardening under ambient conditions ("ambient conditions" meaning, e.g., typical room temperature and normal lighting conditions) may be used. A latent hardener that causes the epoxy adhesive to be curable by application of heat is preferred. When used, this can allow for faster curing by the application of heat, e.g., by raising the temperature of a work piece above ambient. Light-activated hardeners are also suitable, and use thereof can allow for faster curing by the application of an appropriate light.

Some preferred hardeners include dicyandiamide, imidazoles, amines, amides, polyhydric phenols, and polyanhydrides. Dicyandiamide (also known as DICY, dicyanodiamide, and 1- or 2-cyanoguanidine) is preferred. DICY (CAS 461-58-5) has empirical formula C₂N₄H₄, molecular weight 84, and structural formula:

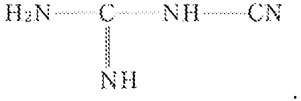

Any amount of hardener may be used as appropriate for any particular composition according to the present invention. The amount of hardener is preferably at least 0 wt% or 0.5 wt%, more preferably at least 1 wt% of the epoxy adhesive. The amount of epoxy hardener is preferably up to about 3 wt%, more preferably up to about 2 wt% of the epoxy adhesive. A preferred amount includes 1.3 wt%.

The optional core-shell rubber component is a particulate material having a rubbery core. Any core-shell rubber material may be used in the present invention. Some preferred core-shell rubber compositions are disclosed in U.S. Patent Nos. 7,642,316 and 7,625,977.

When used, the core-shell rubber component may be in composition A and/or B, but is generally preferably included in the epoxy resin composition A because manufacturing and viscosity considerations facilitate processing and combining with component A. Moreover, some commercially available core-shell rubber compositions are combined with epoxy resins, making it preferable to include such compositions in epoxy resin A.

The rubbery core preferably has a Tg of less than -25° C, more preferably less than - 50° C, and even more preferably less than -70° C. The Tg of the rubbery core may be well below -100° C. The core-shell rubber also has at least one shell portion that preferably has a Tg of at least 50° C. By "core," it is meant an internal portion of the core-shell rubber. The core may form the center of the core-shell particle, or an internal shell or domain of the core-shell rubber. A shell is a portion of the core-shell rubber that is exterior to the rubbery core. The shell portion (or portions) typically forms the outermost portion of the core-shell rubber particle. The shell material is preferably grafted onto the core or is cross-linked. The rubbery core may constitute from 50 to 95%, especially from 60 to 90%, of the weight of the core-shell rubber particle.

The core of the core-shell rubber may be a polymer or copolymer of a conjugated diene such as butadiene, or a lower alkyl acrylate such as n-butyl-, ethyl-, isobutyl- or 2-ethylhexylacrylate. The core polymer may in addition contain up to 20% by weight of other copolymerized monounsaturated monomers such as styrene, vinyl acetate, vinyl chloride, methyl methacrylate, and the like. The core polymer is optionally cross-linked. The core polymer optionally contains up to 5% of a copolymerized graft-linking monomer having two or more sites of unsaturation of unequal reactivity, such as diallyl maleate, monoallyl fumarate, allyl methacrylate, and the like, at least one of the reactive sites being non-conjugated.

The core polymer may also be a silicone rubber. These materials often have glass transition temperatures below -100° C. Core-shell rubbers having a silicone rubber core include those commercially available from Wacker Chemie, Munich, Germany, under the trade name Genioperl.

The shell polymer, which is optionally chemically grafted or cross-linked to the rubber core, is preferably polymerized from at least one lower alkyl methacrylate such as methyl methacrylate, ethyl methacrylate or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000.

A preferred type of core-shell rubber has reactive groups in the shell polymer which can react with an epoxy resin or an epoxy resin hardener. Glycidyl groups are suitable. These can be provided by monomers such as glycidyl methacrylate.

A particularly preferred type of core-shell rubber is of the type described in U.S. 2007/0027233 (EP 1 632 533 A1). Core-shell rubber particles as described in the document include a cross-linked rubber core, in most cases being a cross-linked copolymer of butadiene, and a shell which is preferably a copolymer of styrene, methyl methacrylate, glycidyl methacrylate and optionally acrylonitrile. The core-shell rubber is preferably dispersed in a polymer or an epoxy resin, also as described in the document.

Preferred core-shell rubbers include those sold by Kaneka Corporation under the designation Kaneka Kane Ace, including the Kaneka Kane Ace 15 and 120 series of products, including Kaneka Kane Ace MX 153, Kaneka Kane Ace MX 154, Kaneka Kane Ace MX 156, Kaneka Kane Ace MX 257 and Kaneka Kane Ace MX 120 core-shell rubber dispersions, and mixtures thereof. The products contain the core-shell rubber (CSR) particles pre-dispersed in an epoxy resin, at various concentrations. For example, Kane Ace MX 153 comprises 33% CSR, Kane Ace MX 154 comprises 40% CSR, and Kane Ace MX 156 comprises 25% CSR.

Any amount of core-shell rubber adduct may be used. The epoxy adhesive of the invention preferably has a total core-shell rubber content of at least 3 wt%, more preferably at least 5 wt%, 7 wt%, or 10 wt%, based on weight of composition A or B (preferably A) in which the core-shell rubber is included. The epoxy adhesive of the invention preferably has a total core-shell rubber content up to 30 wt%, more preferably up to 25 wt%, 20 wt%, or 15 wt%. Some preferred amounts include 5.88 wt% 7.88 wt%, and 9.00 wt%. When the core-shell rubber is provided, e.g., as a dispersion, the total CSR content is calculated for purposes of this invention based on the weight of the CSR in the composition. For example, an epoxy resin composition comprising 31.5 wt% Ace 156 (Kaneka) comprises 7.88 wt% CSR because Ace 156 is a dispersion comprising 25% CSR particles.

When used, fillers may be present in any useful amount, and can be determined by those of ordinary skill in the art using this document as guidance. Typically, fillers may be present in amounts more than or about 3 wt%, more preferably more than or about 5 wt% of the epoxy adhesive. Fillers may be present in amounts less than or about 20 wt%, more preferably less than or about 15 wt% of the epoxy adhesive.

Optional fillers include mineral fillers, such as calcium carbonate, calcium oxide, and talc. Calcium carbonate (e.g., sold under trade name Omya®), which can be used to reduce shrinkage and increase corrosion resistance. Calcium oxide (e.g., sold under the trade name Chaux Vive) is a humidity scavenger that may help to preserve a partially-cured epoxy adhesive prior to final curing. Talc is available, e.g., under the trade name Mistrofil®, and aluminum magnesium silicate (wollastonite) is available, e.g., under the trade name Nyad® 200.

Thixotropic agents and other viscosity regulators may also be optionally used. One such preferred example includes fumed silica (e.g., sold under the trade name Aerosil®). A preferred thixotropic agent that also improves wash-off resistance is a mixture of polyester and liquid epoxy resin (LER), such as Dynacol (25% polyester 7330 and 75% LER 330).

Castor oil wax with polyamides may also be used, and are commercially available from Rockwood under the trade name Rheotix, e.g., Rheotix 240 Other suitable gelling agents include Luvotix grades (like Luvotix HT) supplied from Lehmann, and Voss which is a polyamide without the wax or Disparlon grades supplied from Kusumoto Chemicals Ltd.

When used, fumed silica may be present in amounts more than or about 2 wt%, preferably more than or about 6 wt% of the epoxy adhesive. Fumed silica may be present in amounts less than or about 15 wt%, more preferably less than or about 12 wt% of the epoxy adhesive.

Reactive and non-reactive diluents may also optionally be used. A preferred reactive diluent is a monoglycidyl ester of neodecanoic acid, which also can act as a viscosity-reducing agent. It is commercially available, e.g., under the trade name Erisys GS-110.

At least one adhesion promoter may also be optionally used. Preferred adhesion promotes include epoxy silanes, e.g., sold under the trade name Silquest™ A-187.

At least one surfactant or wetting agent may be optionally used. A preferred wetting agent is a non-ionic fluorinated polymer. Such agents are also preferably capable of absorbing residual oils (e.g., manufacturing and processing oils) on metal surfaces, thereby facilitating adhesion to metal surfaces.

At least one aliphatic substituted phenol may also be optionally used, preferably a phenol derivative with an aliphatic group in the meta-position, e.g., cardanol. Such compounds promote adhesion and corrosion resistance. Cardanol is commercially available, e.g., under the trade name Cardolite™ NC 700.

Other additives may also be used. Some non-limiting examples of other additives include flexbilized epoxy resins such as fatty acid epoxy adducts, gelling compounds such as polyester or PVB, and flame retardants such as aluminum-tris-hydroxide. Pigments or coloring agents, e.g., Irgalite® green or Araldite® blue, may also be used.

An additive to help regulate the thickness of the layer of epoxy adhesive may optionally be included, such as beads or particles, preferably glass beads. For example, a small amount (e.g., up to 0.3 or 0.5 wt% of the total epoxy adhesive) of glass beads of known average diameter may be added. When used, diameters of 0.1 mm, 0.2 mm, 0.3 mm, 0.4 mm, or therebetween, are preferred. A preferred diameter is 0.2 mm. The diameter and amount chosen will generally depend on the intended use of the epoxy adhesive. This additive can be included in either or both of compositions A and B. For manufacturing reasons, it is generally more convenient to include this additive in whichever of compositions A or B is the majority contributor (by weight or volume) to the epoxy adhesive.

Epoxy resin composition A and hardener composition B can be combined in any suitable proportion as determined by one of ordinary skill in the art, using usual considerations of, e.g., the resin content in A, the amount and type of curing agent and/or accelerator in B, the amounts of reactive toughener in A and/or B, the amounts of fillers or functional additives in A and/or B, etc. Indeed, the amounts of actives, fillers, or other additives, can be selected so as to provide convenient (e.g., integer-valued) volume ratios. Mixing ratios are generally expressed in terms of volume. Some preferred mixing ratios include 2:1, 3:2, 1:1, 2:3, or 1:2, or therebetween (e.g., 2:1 to 1:2, or 2:1 to 1:1), expressed as parts by volume of A:B.

The present invention provides epoxy adhesives that may be used on a variety of surfaces. Some suitable materials include metals (e.g., aluminum, steel), thermoplastic polymers (e.g., polyurethanes, acrylics, and polycarbonates, including copolymers, terpolymers, etc.), thermoset polymers (e.g., vulcanized rubber, urea-formaldehyde foams, melamine resins), wood, carbon fiber composites (CFC), glass fiber composites (GFC), and other composites. The epoxy adhesives may be used to bond identical materials (e.g., steel and steel), similar materials (e.g., steel and aluminum) or dissimilar materials (e.g., CFC/steel; CFC/aluminum; polycarbonate/vulcanized rubber; or aluminum/wood). Other combinations of these and other materials are also suitable.

The present invention relates to the individual compositions (epoxy resin composition and hardener composition) according to the present invention, to kits including the individual compositions, and to epoxy adhesive in the uncured state. The present invention also includes methods of making an epoxy resin composition and/or hardener composition, to methods of making an epoxy adhesive by combining an epoxy resin composition and hardener composition; and to methods of using the epoxy adhesive. The present invention also includes the inventive epoxy adhesive in the uncured or cured state, as well as products comprising the cured or uncured epoxy adhesive.

### EXAMPLES

Some embodiments of the invention will now be described in the following Examples, wherein all parts and percentages are by weight unless otherwise specified.

Four tougheners are prepared for testing purposes. Reactive tougheners TH A and TH B are suitable for use in the present invention. Nonreactive tougheners TH C and TH D are comparative reference non-reactive tougheners.

### Preparation of Toughener TH A

Reactive toughener TH A is a capped bisphenol A that may be prepared as described in US Patent Publication 2008/0009589 A1 (Toughener B of that document): Combine 66.63 wt% polyether diol (polyTHF 2000; BASF), 0.34wt% trimethylolpropane (TMP) (Merck), and 20.71 wt% bisphenol A, and heat to 140° C under vacuum. When the mixture is homogeneous, cool to 60° C. Then add 12.30 wt-% hexamethylene-1,6-diisocyanate (HDI) (Bayer/Degussa) and mix for 5 minutes under nitrogen. Then add 0.02 wt% dibutyltin dilaurate (DBTL) (Sigma Aldrich) and the mixture is allowed to react at 85° C for 45 min under nitrogen. Mix an additional 20 min under vacuum for degassing.

### Preparation of Toughener TH B

Reactive toughener TH B is a polyphenol (ODBA)-blocked PUR prepared with an excess of ODBA that may be prepared as described in Example 13 of EP 0 308 664 B1 (e.g., prepolymer 13 of that document): Combine 64.89 wt% dried polyTHF 2000 (BASF), 0.33 wt% dried TMP (Merck), and 9.98 wt% HDI (Bayer/Merck) and mix at 85° C to homogeneity. Then 0.06 wt% DBTL (Sigma Aldrich) is added and the mixture is allowed to react at 85° C for 1 hour under nitrogen atmosphere.

24.74 wt% o,o'-diallylbisphenol A (MPI) is added and the mixture is stirred for additional 60 min under nitrogen atmosphere. Degas the reaction product for 20 min under vacuum. Reaction is permitted to proceed until the isocyanate (NCO) content is 0.0% (by FTIR).

### Preparation of Toughener TH C

Nonreactive toughener TH C is a secondary-amine non-reactive blocked PUR (e.g., as in US 2006/0276601, preparation of a diisopropylamine capped toughener according to formula I): Combine 79.29 wt% dried PolyTHF 2000 (BASF), 0.54 wt% dried TMP (Merck), and 13.29 wt% HDI (Bayer/Merck) and mix at 85° C to homogeneity. Then 0.08 wt% Snapcure 3030 (Johnson Matthey) is added and the mixture is allowed to react at 85° C for 1 hour under nitrogen atmosphere.

6.8 wt% diisopropylylamine (Merck) is added and the mixture is stirred for additional 60 min under nitrogen atmosphere. Degas the reaction product for 20 min under vacuum. Reaction is permitted to proceed until the NCO content is 0.0% (by FTIR).

### Preparation of Toughener TH D

Nonreactive Toughener TH D is an o-allylphenol nonreactive blocked PUR. Combine 77.58 wt% dried PolyTHF 2000 (BASF), 0.54 wt% dried TMP (Merck), and 0.08 wt% dibutyltindilaurate (Fluka) and mix at 85°C to homogeneity. Then 13.02 wt% HDI (Bayer/Merck) is added and the mixture is allowed to react at 85°C for 1 hour under nitrogen atmosphere.

8.78 wt% 2-Allylphenol (Sigma Aldrich) is added and the mixture is stirred for additional 60 min under nitrogen atmosphere. Degas the reaction product for 20 min under vacuum.

### Preparation of Epoxy Resin Compositions and Hardener Compositions

Ten compositions of epoxy resin side compositions are prepared, five using reactive tougheners TH A and TH B, and five using non-reactive tougheners TH C and TH D or no toughener. The compositions are shown in Table 1.

**Table 1: "A" epoxy resin side compositions**

| | **A1** | **A2** | **A1-1** | **A1-2** | **A2-1** | **A3** | **A4** | **A5** | **A6** | **A7** |
|---|---|---|---|---|---|---|---|---|---|---|
| Liquid epoxy resin D.E.R. 331 (TDCC) | 32 | 32 | 36 | 23 | 36 | 32 | 40.5 | 39.5 | 39.5 | 32 |
| CSR: MX 156 (Kaneka) | 31.5 | 31.5 | 36 | 23.5 | 36 | 31.5 | 40.5 | 40 | 39 | 31.5 |
| toughener TH A | 17 | 0 | 8.5 | 34 | 0 | 0 | 0 | 0 | 0 | 0 |
| toughener TH B | 0 | 17 | 0 | 0 | 8.5 | 0 | 0 | 0 | 0 | 0 |
| toughener TH C | 0 | 0 | 0 | 0 | 0 | 17 | 0 | 0 | 0 | 0 |
| toughener TH D | 0 | 0 | 0 | 0 | 0 | 0 | 0 | 0 | 0 | 17 |
| ODBA (o,o'- diallylbisphenol A) (Evonik) | 0 | 0 | 0 | 0 | 0 | 0 | 0 | 1 | 2 | 0 |
| Colorant (Araldite Blue DW0135; Hunstman) | 0.5 | 0.5 | 0.5 | 0.5 | 0.5 | 0.5 | 0.5 | 0.5 | 0.5 | 0.5 |
| Epoxy silane A 187 (Momentive) | 3 | 3 | 3 | 3 | 3 | 3 | 3 | 3 | 3 | 3 |
| Cashew nut shell oil CNSL NC 700 (Cardolite) | 0.5 | 0.5 | 0.5 | 0.5 | 0.5 | 0.5 | 0.5 | 0.5 | 0.5 | 0.5 |
| Epoxy diluents Polypox R18 (TDCC) | 5 | 5 | 5 | 5 | 5 | 5 | 5 | 5 | 5 | 5 |
| CaCO₃: (Omya BSH) | 6 | 6 | 6 | 6 | 6 | 6 | 6 | 6 | 6 | 6 |
| Fluorite: Mistrofill HS 40 (Luzenac) | 4 | 4 | 4 | 4 | 4 | 4 | 4 | 4 | 4 | 4 |
| Glass beads (0.2 mm) (Spheriglass) | 0.5 | 0.5 | 0.5 | 0.5 | 0.5 | 0.5 | 0.5 | 0.5 | 0.5 | 0.5 |

Compositions A1, A2, A1-1, A1-2, and A2-1 comprise reactive tougheners suitable for use in the current invention. Composition A1 is a resin composition using a reactive bisphenol A capped toughener. Composition A2 is similar, but uses an ODBA capped toughener. Compositions A1-1 and A2-1 are based on A1 and A2 but use lower amounts of reactive capped PU polymer. Composition A1-2 is based on A1 but using a higher amount of PU-toughener.

Compositions A3, A4, A5, A6, and A7, are reference compositions that do not comprise reactive tougheners. Composition A3 is a reference resin composition using a nonreactive di-isopropyl-amine capped toughener. A4 is a reference composition using no toughener and no other accelerator. Reference compositions A5 and A6 use ODBA at different amounts as an accelerator but use no toughener. Bisphenolic compounds are well known as curing accelerator for epoxy resin compositions. Composition A7 is a reference composition similar to A3, but using a mono-phenol instead of a sec-amine capping group.

Nine compositions of hardener side compositions are prepared, four using reactive tougheners TH A and TH B, and five using non-reactive tougheners TH C and TH D or no toughener. The compositions are shown in Table 2.

**Table 2: "B" hardener side compositions**

| | **B1** | **B2** | **B1-1** | **B2-1** | **B3** | **B4** | **B5** | **B6** | **B7** |
|---|---|---|---|---|---|---|---|---|---|
| TETA (triethylenetetramine) (DEH 24; TDCC) | 18 | 18 | 18 | 18 | 18 | 18 | 18 | 18 | 18 |
| Jeffamine T403 (BASF) | 27.5 | 27.5 | 42.5 | 42.5 | 27.5 | 27.5 | 26.5 | 25.5 | 27.5 |
| Ancamine K 54 (BASF) | 12 | 12 | 12 | 12 | 12 | 12 | 12 | 12 | 12 |
| toughener TH A | 30 | 0 | 15 | 0 | 0 | 0 | 0 | 0 | 0 |
| toughener TH B | 0 | 30 | 0 | 15 | 0 | 0 | 0 | 0 | 0 |
| toughener TH C | 0 | 0 | 0 | 0 | 30 | 0 | 0 | 0 | 0 |
| toughener TH D | 0 | 0 | 0 | 0 | 0 | 0 | 0 | 0 | 30 |
| ATBN (Hypro 1300X16; Emerald) | 0 | 0 | 0 | 0 | 0 | 30 | 30 | 30 | 0 |
| ODBA (o,o'-diallyl bisphenol A) (Evonik) | 0 | 0 | 0 | 0 | 0 | 0 | 1 | 2 | 0 |
| Wetting agent: FC 4430 (3M) | 0.5 | 0.5 | 0.5 | 0.5 | 0.5 | 0.5 | 0.5 | 0.5 | 0.5 |
| Fumed silica Aerosil 380 (Evonik) | 6 | 6 | 6 | 6 | 6 | 6 | 6 | 6 | 6 |
| Filler: Talc 1N (Luzenac) | 2 | 2 | 2 | 2 | 2 | 2 | 2 | 2 | 2 |
| Dicyandiamide: Amicure CG 1200 (Air Products) | 4 | 4 | 4 | 4 | 4 | 4 | 4 | 4 | 4 |

Compositions B1, B2, B1-1, and B2-1, comprise reactive tougheners suitable for use in the current invention. Composition B1 is a hardener composition using a bisphenol A capped toughener. Composition B2 is similar, but uses an ODBA capped toughener. Compositions B1-1 and B2-1 are similar to B1 and B2 but use a lower amount of reactive PU-toughener.

Compositions B3, B4, B5, B6, and B7, are reference compositions that do not comprise reactive tougheners according to the present invention. Composition B3 is a reference resin composition using a non reactive di-isopropyl-amine capped toughener. Composition B4 is a reference composition using no PU-toughener and no other accelerator. Reference compositions B5 and B6 use ODBA at different amounts as an accelerator but use no PU-toughener. Bisphenolic compounds are well known as curing accelerator for epoxy resin compositions. Composition B7 is a reference composition and similar to B3, but using a mono-phenol instead of a sec-amine capping group.

### Preparation and Testing of Adhesive Compositions

Nineteen adhesive compositions are prepared by combining various A-side and B-side compositions as shown in Tables 1 and 2. The adhesive compositions are tested for various properties.

The bead test involves applying a bead of adhesive to a surface and manually pressing the flat side onto the bead to determine when the bead has set, by lack of intrusion of the spatula into the bead.

Lap shear strength is measured according to DIN EN 1465: 30×20 mm bonding area (test speed 10 mm/min), zinc coated electro-galvanized steel DC 04 - B + ZE 0.8 mm plate thickness, and 0.2 mm adhesive layer thickness. Curing and testing are performed at 23° C, and the strength is measured after the noted curing periods (to monitor strength build-up).

Impact peel strength and impact energy are measured according to ISO 11343: 30×20 mm bonding area (test speed 2 m/s) zinc-coated electro-galvanized steel DC 04 - B + ZE 0.8 mm plate thickness, and 0.2 mm adhesive layer thickness. Curing is performed at 23° C, and testing is performed at room temperature (e.g., 23° C) after 7 days.

The adhesives listed in Table 3 are prepared according to the present invention from A-side and B-side compositions that each comprise reactive tougheners. The adhesives listed in Table 4 are comparative adhesives in which one or both of the A-side and B-side compositions do not comprise reactive tougheners. All compositions are prepared at a volume ratio A:B of 2:1. The term "n.m." in the Tables means the property was not measurable because the adhesive composition was not sufficiently reactive to have set.

**Table 3: Performance summary of inventive adhesive compositions**

| | **A1 + B1** | **A2 + B2** | **A1-1 + B1** | **A1-2 + B1** | **A2-1 + B2** | **A1 + B1-1** | **A2 + B2-1** | **A1-1 + B1-1** | **A2-1 + B2-1** |
|---|---|---|---|---|---|---|---|---|---|
| Lap shear strength (120 minutes) [MPa] | 0.3 | 0.3 | 0.2 | 0.2 | 0.2 | 0.1 | 0.1 | 0.1 | 0.1 |
| Lap shear strength (150 minutes) [MPa] | 1.2 | 0.9 | 1.2 | 0.9 | 1.2 | 0.4 | 0.5 | 0.4 | 0.7 |
| Lap shear strength (180 minutes) [MPa] | 2.8 | 3.3 | 4.7 | 2.5 | 3.4 | 2.1 | 3.2 | 1.6 | 2.4 |
| Lap shear strength (7 days) [MPa] | 20.9 | 21.9 | 21.1 | 17.1 | 20.9 | 18.5 | 20.6 | 20.9 | 22.9 |
| Bead test [min] | 35 | 35 | 45 | 35 | 45 | 50 | 50 | 50 | 50 |
| Impact peel strength after 7 days [N/mm] | 26 | 20 | 13 | 39 | 14 | 17 | 16 | 15 | 12 |
| Impact energy after 7 days [J] | 8.8 | 8.3 | 4.4 | 12.3 | 4.7 | 5.5 | 5.3 | 4.6 | 3.9 |
| Total amount of toughener wt% | 21.3 | 21.3 | 15.7 | 32.7 | 15.7 | 16.3 | 16.3 | 10.7 | 10.7 |

**Table 4: Performance summary of reference adhesive compositions.**

| | **A3 + B3** | **A4 + B4** | **A1 + B4** | **A1-2 + B4** | **A4 + B1** | **A5 + B4** | **A5 + B5** | **A6 + B6** | **A4 + B6** | **A7 + B7** |
|---|---|---|---|---|---|---|---|---|---|---|
| Lap shear strength (120 minutes) [MPa] | n.m. | n.m. | n.m. | n.m. | n.m. | n.m. | n.m. | n.m. | n.m. | n.m. |
| Lap shear strength (150 minutes) [MPa] | n.m. | n.m. | 0.1 | 0.1 | n.m. | 0.1 | n.m. | 0.1 | n.m. | 0.3 |
| Lap shear strength (180 minutes) [MPa] | n.m. | 0.1 | 0.4 | 0.8 | 0.1 | 0.5 | 0.3 | 0.5 | 0.3 | 1 |
| Lap shear strength (7 days) [MPa] | 12.5 | 21.8 | 19.5 | 8.9 | 22.9 | 20.1 | 21 | 21.2 | 21.7 | 17 |
| Bead test [min] | 100 | 90 | 60 | 50 | 80 | 80 | 60 | 50 | 70 | 80 |
| Impact peel strength after 7 days [N/mm] | 0 | 10 | 25 | 0 | 8 | 10 | 13 | 10 | 11 | 24 |
| Impact energy after 7 days [J] | 0 | 3.3 | 9.9 | 0 | 2.1 | 2.6 | 2.9 | 2.5 | 3.5 | 7.9 |
| Total amount of toughener wt% | 21.3 | 0 | 11.3 | 22.7 | 10 | 0 | 0 | 0 | 0 | 21.3 |

A1/B1 and A2/B2 are inventive adhesive compositions that use differently capped reactive PU-polymers. A1-1/B1 and A2-1/B2 are inventive adhesive compositions that use 50% less reactive PU-toughener (but differently capped with two different poly-phenols) in part A, but still see a significantly quicker curing performance than the reference adhesives. A1-2/B1 is similar to A1/B1, but uses a higher amount of PU-toughener in part A. As a result the impact strength and energy values are significantly higher. A2/B2-1 is inventive and uses 50% less reactive PU-toughener in the B part, but still has a quicker curing performance. A2-1/B2-1 is inventive and even though the amount of PU-toughener in the A and B part of each is reduced by 50%, the curing performance remains quicker.

A3/B3 is a reference composition in which both parts A and B comprise a capped nonreactive PU-polymer. A4/B4 is a reference composition comprising no PU-polymer in either part A or B. A1/B4 is a reference composition comprising a capped reactive PU-polymer only in epoxy resin part A. A1-2/B4 is a reference composition using a high amount of reactive PU-toughener in part A, but no reactive PU-toughener in part B. A4/B 1 is a reference composition using a capped reactive PU-polymer in the hardener B part. A5/B4 is a reference composition using an ODBA accelerator, but no PU-polymer, but in the epoxy resin part A. A5/B5 is a reference composition using the ODBA accelerator in both parts A (resin) and B (hardener), but no PU-polymer. A6/B6 is similar to A5/B5 but uses double the amount of ODBA in both parts. A4/B6 is a reference composition comprising ODBA accelerator only in the hardener part, and no PU-polymer.

As can be seen, inventive adhesive compositions show significantly shorter cure time and/or set time over the reference compositions. Compositions not containing reactive toughener cure very slowly and do not provide sufficient quasi-static lap shear and dynamic impact peel strength values. The presence of sufficient amounts of non-reactive toughener may give fair IPS, but does not confer rapid cure.

In general, the reference compositions cure significantly more slowly than the inventive compositions and do not offer sufficient dynamic strength values.

In the reference compositions, the presence of a reactive PU-polymer only in the hardener composition does not appear to provide acceptable impact strength or rapid cure time.

In the reference compositions, the presence of a reactive PU-toughener only in the epoxy resin composition appears to provide acceptable impact strength, but slow curing.

## Claims

1. An adhesive prepared by combining an epoxy resin composition A and a hardener composition B, where
the epoxy resin composition A comprises, or is prepared by combining:
a first reactive toughener in an amount of 5 to 50 wt% of composition A; and
a liquid epoxy resin in an amount of 20 to 65 wt% of composition A; and
the hardener composition B comprises, or is prepared by combining:
a second reactive toughener in an amount of 5 to 50 wt% of composition B;
a curing accelerator;
a polymeric amine or amide, or combination thereof, in the amount of 15 to 40 wt% of composition B; and
a low molecular weight amine in the amount of 10 to 25 wt% of composition B;
wherein the first and second reactive tougheners each independently is a polyurethane prepolymer terminated with a capping group comprising at least two phenolic hydroxy groups; and the total amount of first and second reactive toughener is 10 to 40 wt% of the adhesive.

2. The adhesive of claim 1, which has an impact peel strength of at least 22 N/mm, when cured for 7 days at 23° C and tested at room temperature on zinc-coated electro-galvanized steel according to ISO 11343.

3. The adhesive of any of the above claims, which has a lap shear strength of at least 17 MPa, when cured for 7 days at 23° C and tested at room temperature on zinc-coated electro-galvanized steel according to DIN EN 1465.

4. The adhesive of claim 1 wherein the capping group for the first and second reactive toughener independently comprises bisphenol A, bisphenol M, or o,o'-diallylbisphenol A.

5. The adhesive of any of the above claims where the first and second reactive tougheners comprise the same reactive toughener.

6. The adhesive of any of the above claims wherein the low molecular weight amine comprises at least one of triethylenetetramine, diethylenetriamine, isophoronediamine, and ethylenediamine.

7. The adhesive of any of the above claims wherein the polymeric amine comprises at least one polyether diamine or polyether triamine.

8. The adhesive of any of the above claims wherein epoxy resin composition A further comprises up to 15 wt% solid epoxy resin, based on weight of epoxy resin composition A.

9. The adhesive of any of the above claims wherein epoxy resin composition A further comprises 3 to 30 wt% of a core-shell rubber, based on weight of epoxy resin composition A.

10. The adhesive of any of the above claims wherein the curing accelerator comprises 5 to 15 wt% based on weight of composition B.

11. A method of making an epoxy adhesive by combining an epoxy resin composition A and a hardener composition B, where
the epoxy resin composition A comprises, or is prepared by combining:
a first reactive toughener in an amount of 5 to 50 wt% of composition A; and
a liquid epoxy resin in an amount of 20 to 65 wt% of composition A; and
the hardener composition B comprises, or is prepared by combining:
a second reactive toughener in an amount of 5 to 50 wt% of composition B;
a curing accelerator;
a polymeric amine or amide, or combination thereof, in the amount of 15 to 40 wt% of composition B; and
a low molecular weight amine in the amount of 10 to 25 wt% of composition B;
wherein the first and second reactive tougheners each independently is a polyurethane prepolymer terminated with a capping group comprising at least two phenolic hydroxy groups; and the total amount of first and second reactive toughener is 10 to 40 wt% of the epoxy adhesive.

12. A method of making a cured epoxy adhesive by combining an epoxy resin composition A and a hardener composition B to obtain an uncured epoxy adhesive, and permitting the uncured epoxy adhesive to cure, where
the epoxy resin composition A comprises, or is prepared by combining:
a first reactive toughener in an amount of 5 to 50 wt% of composition A; and
a liquid epoxy resin in an amount of 20 to 65 wt% of composition A; and
the hardener composition B comprises, or is prepared by combining:
a second reactive toughener in an amount of 5 to 50 wt% of composition B;
a curing accelerator;
a polymeric amine or amide, or combination thereof, in the amount of 15 to 40 wt% of composition B; and
a low molecular weight amine in the amount of 10 to 25 wt% of composition B;
wherein the first and second reactive tougheners each independently is a polyurethane prepolymer terminated with a capping group comprising at least two phenolic hydroxy groups; and the total amount of first and second reactive toughener is 10 to 40 wt% of the uncured epoxy adhesive.

13. A kit comprising an epoxy resin composition A and a hardener composition B, where
the epoxy resin composition A comprises, or is prepared by combining:
a first reactive toughener in an amount of 5 to 50 wt% of composition A; and
a liquid epoxy resin in an amount of 20 to 65 wt% of composition A; and
the hardener composition B comprises, or is prepared by combining:
a second reactive toughener in an amount of 5 to 50 wt% of composition B;
a curing accelerator;
a polymeric amine or amide, or combination thereof, in the amount of 15 to 40 wt% of composition B; and
a low molecular weight amine in the amount of 10 to 25 wt% of composition B;
wherein the first and second reactive tougheners each independently is a polyurethane prepolymer terminated with a capping group comprising at least two phenolic hydroxy groups; and the total amount of first and second reactive toughener is 10 to 40 wt% based on a volume ratio of composition A:composition B in the range of 2: 1 to 1:2.

## Patentansprüche

1. Ein Klebstoff, hergestellt durch das Kombinieren einer Epoxidharzzusammensetzung A und einer Härtungsmittelzusammensetzung B, wobei
die Epoxidharzzusammensetzung A Folgendes beinhaltet oder durch das Kombinieren von Folgendem hergestellt wird:
einem ersten reaktionsfähigen Schlagzähigkeitsverbesserer in einer Menge von 5 bis 50 Gew.-% der Zusammensetzung A; und
einem flüssigen Epoxidharz in einer Menge von 20 bis 65 Gew.-% der Zusammensetzung A; und
die Härtungsmittelzusammensetzung B Folgendes beinhaltet oder durch das Kombinieren von Folgendem hergestellt wird:
einem zweiten reaktionsfähigen Schlagzähigkeitsverbesserer in einer Menge von 5 bis 50 Gew.-% der Zusammensetzung B;
einem Aushärtungsbeschleuniger;
einem polymeren Amin oder Amid oder einer Kombination davon in der Menge von 15 bis 40 Gew.-% der Zusammensetzung B; und
einem niedermolekularen Amin in der Menge von 10 bis 25 Gew.-% der Zusammensetzung B;
wobei der erste und zweite reaktionsfähige Schlagzähigkeitsverbesserer jeweils unabhängig ein Polyurethanpräpolymer sind, das in einer Verkappungsgruppe terminiert, die mindestens zwei phenolische Hydroxygruppen beinhaltet; und die Gesamtmenge des ersten und zweiten reaktionsfähigen Schlagzähigkeitsverbesserers 10 bis 40 Gew.-% des Klebstoffs beträgt.

2. Klebstoff gemäß Anspruch 1, der eine Schlag-Schälfestigkeit von mindestens 22 N/mm aufweist, wenn über 7 Tage bei 23 °C ausgehärtet und bei Raumtemperatur auf zinkbeschichtetem elektrolytisch verzinktem Stahl gemäß ISO 11343 geprüft.

3. Klebstoff gemäß einem der vorhergehenden Ansprüche, der eine Überlappungsscherfestigkeit von mindestens 17 MPa aufweist, wenn über 7 Tage bei 23 °C ausgehärtet und bei Raumtemperatur auf zinkbeschichtetem elektrolytisch verzinktem Stahl gemäß DIN EN 1465 geprüft.

4. Klebstoff gemäß Anspruch 1, wobei die Verkappungsgruppe für den ersten und zweiten reaktionsfähigen Schlagzähigkeitsverbesserer unabhängig Bisphenol A, Bisphenol M oder o,o'-Diallylbisphenol A beinhaltet.

5. Klebstoff gemäß einem der vorhergehenden Ansprüche, wobei der erste und zweite reaktionsfähige Schlagzähigkeitsverbesserer den gleichen reaktionsfähigen Schlagzähigkeitsverbesserer beinhalten.

6. Klebstoff gemäß einem der vorhergehenden Ansprüche, wobei das niedermolekulare Amin mindestens eines von Triethylentetramin, Diethylentriamin, Isophorondiamin und Ethylendiamin beinhaltet.

7. Klebstoff gemäß einem der vorhergehenden Ansprüche, wobei das polymere Amin mindestens ein Polyetherdiamin oder Polyethertriamin beinhaltet.

8. Klebstoff gemäß einem der vorhergehenden Ansprüche, wobei die Epoxidharzzusammensetzung A, bezogen auf das Gewicht der Epoxidharzzusammensetzung A, ferner zu bis zu 15 Gew.-% festes Epoxidharz beinhaltet.

9. Klebstoff gemäß einem der vorhergehenden Ansprüche, wobei die Epoxidharzzusammensetzung A, bezogen auf das Gewicht der Epoxidharzzusammensetzung A, ferner zu 3 bis 30 Gew.-% einen Kern-Schale-Kautschuk beinhaltet.

10. Klebstoff gemäß einem der vorhergehenden Ansprüche, wobei der Aushärtungsbeschleuniger, bezogen auf das Gewicht der Zusammensetzung B, 5 bis 15 Gew.-% ausmacht.

11. Ein Verfahren zum Produzieren eines Epoxidklebstoffs durch das Kombinieren einer Epoxidharzzusammensetzung A und einer Härtungsmittelzusammensetzung B, wobei die Epoxidharzzusammensetzung A Folgendes beinhaltet oder durch das Kombinieren von Folgendem hergestellt wird:
einem ersten reaktionsfähigen Schlagzähigkeitsverbesserer in einer Menge von 5 bis 50 Gew.-% der Zusammensetzung A; und
einem flüssigen Epoxidharz in einer Menge von 20 bis 65 Gew.-% der Zusammensetzung A; und
die Härtungsmittelzusammensetzung B Folgendes beinhaltet oder durch das Kombinieren von Folgendem hergestellt wird:
einem zweiten reaktionsfähigen Schlagzähigkeitsverbesserer in einer Menge von 5 bis 50 Gew.-% der Zusammensetzung B;
einem Aushärtungsbeschleuniger;
einem polymeren Amin oder Amid oder einer Kombination davon in der Menge von 15 bis 40 Gew.-% der Zusammensetzung B; und
einem niedermolekularen Amin in der Menge von 10 bis 25 Gew.-% der Zusammensetzung B;
wobei der erste und zweite reaktionsfähige Schlagzähigkeitsverbesserer jeweils unabhängig ein Polyurethanpräpolymer sind, das in einer Verkappungsgruppe terminiert, die mindestens zwei phenolische Hydroxygruppen beinhaltet; und die Gesamtmenge des ersten und zweiten reaktionsfähigen Schlagzähigkeitsverbesserers 10 bis 40 Gew.-% des Epoxidklebstoffs beträgt.

12. Ein Verfahren zum Produzieren eines ausgehärteten Epoxidklebstoffs durch das Kombinieren einer Epoxidharzzusammensetzung A und einer Härtungsmittelzusammensetzung B zum Erhalten eines nicht ausgehärteten Epoxidklebstoffs und das Aushärtenlassen des nicht ausgehärteten Epoxidklebstoffs, wobei
die Epoxidharzzusammensetzung A Folgendes beinhaltet oder durch das Kombinieren von Folgendem hergestellt wird:
einem ersten reaktionsfähigen Schlagzähigkeitsverbesserer in einer Menge von 5 bis 50 Gew.-% der Zusammensetzung A; und
einem flüssigen Epoxidharz in einer Menge von 20 bis 65 Gew.-% der Zusammensetzung A; und
die Härtungsmittelzusammensetzung B Folgendes beinhaltet oder durch das Kombinieren von Folgendem hergestellt wird:
einem zweiten reaktionsfähigen Schlagzähigkeitsverbesserer in einer Menge von 5 bis 50 Gew.-% der Zusammensetzung B;
einem Aushärtungsbeschleuniger;
einem polymeren Amin oder Amid oder einer Kombination davon in der Menge von 15 bis 40 Gew.-% der Zusammensetzung B; und
einem niedermolekularen Amin in der Menge von 10 bis 25 Gew.-% der Zusammensetzung B;
wobei der erste und zweite reaktionsfähige Schlagzähigkeitsverbesserer jeweils unabhängig ein Polyurethanpräpolymer sind, das in einer Verkappungsgruppe terminiert, die mindestens zwei phenolische Hydroxygruppen beinhaltet; und die Gesamtmenge des ersten und zweiten reaktionsfähigen Schlagzähigkeitsverbesserers 10 bis 40 Gew.-% des nicht ausgehärteten Epoxidklebstoffs beträgt.

13. Ein Kit, das eine Epoxidharzzusammensetzung A und eine Härtungsmittelzusammensetzung B beinhaltet, wobei
die Epoxidharzzusammensetzung A Folgendes beinhaltet oder durch das Kombinieren von Folgendem hergestellt wird:
einem ersten reaktionsfähigen Schlagzähigkeitsverbesserer in einer Menge von 5 bis 50 Gew.-% der Zusammensetzung A; und
einem flüssigen Epoxidharz in einer Menge von 20 bis 65 Gew.-% der Zusammensetzung A; und
die Härtungsmittelzusammensetzung B Folgendes beinhaltet oder durch das Kombinieren von Folgendem hergestellt wird:
einem zweiten reaktionsfähigen Schlagzähigkeitsverbesserer in einer Menge von 5 bis 50 Gew.-% der Zusammensetzung B;
einem Aushärtungsbeschleuniger;
einem polymeren Amin oder Amid oder einer Kombination davon in der Menge von 15 bis 40 Gew.-% der Zusammensetzung B; und
einem niedermolekularen Amin in der Menge von 10 bis 25 Gew.-% der Zusammensetzung B;
wobei der erste und zweite reaktionsfähige Schlagzähigkeitsverbesserer jeweils unabhängig ein Polyurethanpräpolymer sind, das in einer Verkappungsgruppe terminiert, die mindestens zwei phenolische Hydroxygruppen beinhaltet; und die Gesamtmenge des ersten und zweiten reaktionsfähigen Schlagzähigkeitsverbesserers, bezogen auf ein Volumenverhältnis von Zusammensetzung A zu Zusammensetzung B in dem Bereich von 2 : 1 bis 1 : 2, 10 bis 40 Gew.-% beträgt.

## Revendications

1. Un adhésif préparé en combinant une composition de résine époxy A et une composition d'agent de réticulation B, où
la composition de résine époxy A comprend, ou est préparée en combinant :
un premier agent de renforcement réactif dans une quantité de 5 à 50 % en poids de la composition A ; et
une résine époxy liquide dans une quantité de 20 à 65 % en poids de la composition A ; et
la composition d'agent de réticulation B comprend, ou est préparée en combinant :
un deuxième agent de renforcement réactif dans une quantité de 5 à 50 % en poids de la composition B ;
un accélérateur de durcissement ;
une amine ou un amide polymères, ou une combinaison de ceux-ci, en quantité de 15 à 40 % en poids de la composition B ; et
une amine de faible masse moléculaire en quantité de 10 à 25 % en poids de la composition B ;
dans lequel les premier et deuxième agents de renforcement réactifs sont chacun indépendamment un prépolymère de polyuréthane terminé par un groupe de coiffage comprenant au moins deux groupes hydroxy phénoliques ; et la quantité totale du premier et du deuxième agent de renforcement réactif représente de 10 à 40 % en poids de l'adhésif.

2. L'adhésif de la revendication 1, lequel a une résistance au pelage à l'impact (impact peel strength) d'au moins 22 N/mm, quand il est durci pendant 7 jours à 23 °C et testé à température ambiante sur de l'acier électrozingué revêtu de zinc conformément à l'ISO 11343.

3. L'adhésif de n'importe lesquelles des revendications ci-dessus, lequel a une résistance au cisaillement de chevauchement d'au moins 17 MPa, quand il est durci pendant 7 jours à 23 °C et testé à température ambiante sur de l'acier électrozingué revêtu de zinc conformément à la DIN EN 1465.

4. L'adhésif de la revendication 1 dans lequel le groupe de coiffage pour le premier et le deuxième agent de renforcement réactif comprend indépendamment le bisphénol A, le bisphénol M, ou le o,o'-diallylbisphénol A.

5. L'adhésif de n'importe lesquelles des revendications ci-dessus où les premier et deuxième agents de renforcement réactifs comprennent le même agent de renforcement réactif.

6. L'adhésif de n'importe lesquelles des revendications ci-dessus dans lequel l'amine de faible masse moléculaire comprend au moins un élément parmi la triéthylènetétramine, la diéthylènetriamine, l'isophoronediamine, et l'éthylènediamine.

7. L'adhésif de n'importe lesquelles des revendications ci-dessus dans lequel l'amine polymère comprend au moins une polyéther diamine ou une polyéther triamine.

8. L'adhésif de n'importe lesquelles des revendications ci-dessus dans lequel la composition de résine époxy A comprend en sus jusqu'à 15 % en poids de résine époxy solide, rapporté au poids de la composition de résine époxy A.

9. L'adhésif de n'importe lesquelles des revendications ci-dessus dans lequel la composition de résine époxy A comprend en sus de 3 à 30 % en poids d'un caoutchouc à coeur-enveloppe, rapporté au poids de la composition de résine époxy A.

10. L'adhésif de n'importe lesquelles des revendications ci-dessus dans lequel l'accélérateur de durcissement comprend de 5 à 15 % en poids rapporté au poids de la composition B.

11. Un procédé de fabrication d'un adhésif époxy en combinant une composition de résine époxy A et une composition d'agent de réticulation B, où
la composition de résine époxy A comprend, ou est préparée en combinant :
un premier agent de renforcement réactif dans une quantité de 5 à 50 % en poids de la composition A ; et
une résine époxy liquide dans une quantité de 20 à 65 % en poids de la composition A ; et
la composition d'agent de réticulation B comprend, ou est préparée en combinant :
un deuxième agent de renforcement réactif dans une quantité de 5 à 50 % en poids de la composition B ;
un accélérateur de durcissement ;
une amine ou un amide polymères, ou une combinaison de ceux-ci, en quantité de 15 à 40 % en poids de la composition B ; et
une amine de faible masse moléculaire en quantité de 10 à 25 % en poids de la composition B ;
dans lequel les premier et deuxième agents de renforcement réactifs sont chacun indépendamment un prépolymère de polyuréthane terminé par un groupe de coiffage comprenant au moins deux groupes hydroxy phénoliques ; et la quantité totale du premier et du deuxième agent de renforcement réactif représente de 10 à 40 % en poids de l'adhésif époxy.

12. Un procédé de fabrication d'un adhésif époxy durci en combinant une composition de résine époxy A et une composition d'agent de réticulation B afin d'obtenir un adhésif époxy non durci, et en permettant à l'adhésif époxy non durci de durcir, où la composition de résine époxy A comprend, ou est préparée en combinant :
un premier agent de renforcement réactif dans une quantité de 5 à 50 % en poids de la composition A ; et
une résine époxy liquide dans une quantité de 20 à 65 % en poids de la composition A ; et
la composition d'agent de réticulation B comprend, ou est préparée en combinant :
un deuxième agent de renforcement réactif dans une quantité de 5 à 50 % en poids de la composition B ;
un accélérateur de durcissement ;
une amine ou un amide polymères, ou une combinaison de ceux-ci, en quantité de 15 à 40 % en poids de la composition B ; et
une amine de faible masse moléculaire en quantité de 10 à 25 % en poids de la composition B ;
dans lequel les premier et deuxième agents de renforcement réactifs sont chacun indépendamment un prépolymère de polyuréthane terminé par un groupe de coiffage comprenant au moins deux groupes hydroxy phénoliques ; et la quantité totale du premier et du deuxième agent de renforcement réactif représente de 10 à 40 % en poids de l'adhésif époxy non durci.

13. Un kit comprenant une composition de résine époxy A et une composition d'agent de réticulation B, où
la composition de résine époxy A comprend, ou est préparée en combinant :
un premier agent de renforcement réactif dans une quantité de 5 à 50 % en poids de la composition A ; et
une résine époxy liquide dans une quantité de 20 à 65 % en poids de la composition A ; et
la composition d'agent de réticulation B comprend, ou est préparée en combinant :
un deuxième agent de renforcement réactif dans une quantité de 5 à 50 % en poids de la composition B ;
un accélérateur de durcissement ;
une amine ou un amide polymères, ou une combinaison de ceux-ci, en quantité de 15 à 40 % en poids de la composition B ; et
une amine de faible masse moléculaire en quantité de 10 à 25 % en poids de la composition B ;
dans lequel les premier et deuxième agents de renforcement réactifs sont chacun indépendamment un prépolymère de polyuréthane terminé par un groupe de coiffage comprenant au moins deux groupes hydroxy phénoliques ; et la quantité totale du premier et du deuxième agent de renforcement réactif représente de 10 à 40 % en poids rapporté à un rapport de volume de la composition A/la composition B compris dans la gamme de 2/1 à 1/2.
